(19) Europäisches Patentamt
European Patent Office
Office européen des brevets

(11) EP 1 393 819 A1

(12) **EUROPÄISCHE PATENTANMELDUNG**

(43) Veröffentlichungstag:
**03.03.2004 Patentblatt 2004/10**

(51) Int Cl.[7]: **B05D 5/08**

(21) Anmeldenummer: **03019209.0**

(22) Anmeldetag: **25.08.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **26.08.2002 DE 10239071**

(71) Anmelder: **BASF AKTIENGESELLSCHAFT**
**67056 Ludwigshafen (DE)**

(72) Erfinder:
- **Keller, Harald**
**67069 Ludwgishafen (DE)**
- **Dielemann, Cedric**
**67630 Scheibenhard (FR)**
- **Quere, David**
**75014 Paris (FR)**
- **Lafuma, Aurelie**
**75011 Paris (FR)**

(74) Vertreter: **Pohl, Michael, Dr. et al**
**Reitstötter, Kinzebach & Partner (GbR),**
**Patentanwälte,**
**Ludwigsplatz 4**
**67059 Ludwigshafen (DE)**

(54) **Verfahren zur Herstellung von Oberflächen, auf denen Flüssigkeiten nicht haften**

(57) Die vorliegende Erfindung betrifft ein Verfahren zur Herstellung von Oberflächen, auf denen bei einer Temperatur $T \geq T1$ Flüssigkeiten A nicht oder nur schlecht haften, und insbesondere zur Herstellung von Oberflächen mit geringer Anschmutzneigung. Die Erfindung betrifft auch Gegenstände, die wenigstens eine derartige Oberfläche aufweisen.

EP 1 393 819 A1

## Beschreibung

Die vorliegende Erfindung betrifft ein Verfahren zur Herstellung von Oberflächen, auf denen bei einer Temperatur $T \geq T1$ Flüssigkeiten A nicht oder nur schlecht haften, und insbesondere zur Herstellung von Oberflächen mit geringer Anschmutzneigung. Die Erfindung betrifft auch Gegenstände, die wenigstens eine derartige Oberfläche aufweisen.

Konventionelle Oberflächen werden in der Regel von Flüssigkeiten benetzt. Der Grad der Benetzung ist ein Wechselspiel zwischen den Kohäsionskräften in der Flüssigkeit und den Adhäsionskräften zwischen Flüssigkeit und Oberfläche. Als Maß für die Benetzbarkeit einer Oberfläche durch eine Flüssigkeit wird häufig der Kontaktwinkel eines Flüssigkeitstropfens auf dieser Oberfläche herangezogen (siehe Barthlott et al., Biologie in unserer Zeit, 28, Nr. 5, 314-322; K. Henning, SÖFW-Journal, Chemische Spezialitäten 127 (2001), S. 96-107). Ein weiteres Maß für die Adhäsion einer Flüssigkeit auf einer Oberfläche, d. h. das Haften von Flüssigkeitstropfen auf einer Oberfläche, ist die Kontaktwinkelhysterese. Die Kontaktwinkelhysterese $\Delta\theta = \theta_a - \theta_r$ ist die Differenz des fortschreitenden Kontaktwinkels $\theta_a$ und des rückschreitenden Kontaktwinkels $\theta_r$ eines ablaufenden Flüssigkeitstropfens auf einer Oberfläche (Dörfler in Grenzflächen und kolloiddisperse Systeme, Springer-Verlag Berlin Heidelberg New York 2002, S. 85-88). Je größer die Kontaktwinkelhysterese, umso stärker ist die Haftung des Flüssigkeitstropfens auf der Oberfläche und umso schwerer laufen Flüssigkeitstropfen von geneigten Oberflächen ab. Gleiches gilt auch für die Benetzbarkeit der Oberfläche durch eine Flüssigkeit.

Der Kontaktwinkel $\theta$ ist im Stand der Technik definiert als der Winkel, der von der besagten Oberfläche und einer Tangente entlang der Oberfläche des Flüssigkeitstropfens im Bereich der Kontaktstelle des Flüssigkeitstropfens mit der Oberfläche eingeschlossen wird, wobei der Kontaktwinkel durch den Flüssigkeitstropfen gemessen wird. Der fortschreitende Kontaktwinkels $\theta_a$ ist der Kontaktwinkel des Tropfens auf der Seite in Bewegungsrichtung, der rückschreitende Kontaktwinkels $\theta_r$ ist der Kontaktwinkel auf der der Bewegungsrichtung entgegengesetzten Seite. Hiervon zu unterscheiden ist der statische Kontaktwinkel für einen ruhenden Tropfen (siehe Dörfler, loc. cit. Abb. 4.7 und 4.8, S. 87ff).

Im täglichen Leben, sowohl im Haushalt wie auch im industriellen Bereich, verschmutzen Oberflächen regelmäßig. Um Flecken oder auch Verschmutzungen zu entfernen sind aufwendige Reinigungsarbeiten notwendig. Ein typisches Beispiel sind ringförmige Flekken, die beim Trocknen von Wasser oder wässrigen Lösungen entstehen, z. B. Flecken von kalkhaltigem Wasser, Regentropfen und dergleichen. Problematisch sind insbesondere auch Flecken von Kaffee, Tee, Säften oder Rotwein. Andere Beispiele für unerwünschte Verschmutzungen sind Ruß, Staub, Sporen, Pollen oder Bakterien. Solche Kontaminationen sehen nicht nur unschön aus sondern können auch zur Degradation von Beschichtungen und Oberflächen führen und stellen hygienische Probleme aus, besonders in Krankenhäusern, Schlachthäusern und Sanitäranlagen.

Das Anschmutzen von Oberflächen ist eng verknüpft mit der Benetzbarkeit der Oberfläche durch Flüssigkeiten (siehe Barthlott et al., Biologie in unserer Zeit, 28, Nr. 5, 314-322; K. Henning, SÖFW-Journal, 127 (2001), S. 96-107) und dem Haften von Flüssigkeitstropfen auf einer Oberfläche. Beispielsweise führt die Benetzung von Oberflächen mit Wasser dazu, dass auf der Oberfläche Wassertropfen zurückbleiben und verdunsten, wobei die in Wasser gelösten oder suspendierten Feststoffe als hässliche Rückstände auf der Oberfläche zurückbleiben. Dieses Problem besteht insbesondere bei Oberflächen, die Regenwasser ausgesetzt sind. Durch die Benetzung einer Oberfläche mit Wasser wird häufig auch ihre Korrosion oder ein Befall mit Mikroorganismen sowie der Bewuchs mit Algen, Flechten, Moosen, Muscheln, etc. ausgelöst, der seinerseits Biokorrosion der Oberfläche zur Folge hat.

Es ist auch bekannt, dass Schmutzpartikel auf rauhen, hydrophoben Oberflächen durch bewegtes Wasser von der Oberfläche abgespült werden (siehe Barthlott et al., loc. cit und WO 96/04123). Dieser Effekt beruht auf der geringen Haftung der Wassertropfen auf den rauhen, hydrophoben Oberflächen und wird auch als Selbstreinigungseffekt oder Lotus-Effekt bezeichnet.

Aus der EP-A 933 388 ist ein Verfahren zur Herstellung strukturierter Oberflächen mit hydrophoben Eigenschaften bekannt, bei dem man zunächst eine Negativform durch Photolithographie herstellt, mit dieser Form eine Kunststofffolie prägt und anschließend die Kunststofffolie mit Fluoralkylsilanen hydrophobiert.

Die EP-A 909 747 beschreibt ein Verfahren zur Erzeugung einer Selbstreinigungseigenschaft auf Keramikkörpern wie Dachziegeln, bei dem man eine Dispersion von Tonpartikeln in einer organischen Silikonharzlösung auf den Keramikkörper aufbringt und die Beschichtung aushärtet.

Die im Stand der Technik beschriebenen Methoden zur Herstellung schwer benetzbarer Oberflächen sind in der Regel sehr aufwendig und führen häufig nicht zu zufriedenstellenden Ergebnissen. Weiterer Nachteil der bekannten schwer benetzbaren Oberflächen ist ihre Empfindlichkeit gegen tensidhaltigen Flüssigkeiten und öl- oder fetthaltigen Verschmutzungen. Häufig weisen die bekannten schwer benetzbaren Oberflächen ein unschönes, mattes Aussehen auf.

Der vorliegenden Erfindung hat daher die Aufgabe, ein weiteres Verfahren zur Herstellung von Oberflächen bereitzustellen, auf denen Flüssigkeiten eine geringe Adhäsion zeigen. Das Verfahren sollte die gezielte Herstellung

solcher Oberflächen erlauben, auf denen andere Flüssigkeiten als Wasser eine geringe Adhäsion zeigen. Das Verfahren sollte zudem einfach durchzuführen sein und das optische Erscheinungsbild der Oberflächen möglichst nicht nachteilig beeinflussen.

Es wurde überraschenderweise gefunden, dass diese Aufgabe durch ein Verfahren gelöst wird, bei dem man auf eine Oberfläche O eines Substrats bzw. Gegenstands, die eine Vielzahl von Vertiefungen und/oder Erhebungen aufweist, wobei die Abstände zwischen benachbarten Erhebungen im Mittel im Bereich von 0,01 bis 500 µm und die Höhenunterschiede zwischen zueinander benachbarten Erhebungen und Vertiefungen im Mittel Bereich von 0,01 bis 500 µm liegen, eine Substanz B, die mit der Flüssigkeit A nicht mischbar bzw. in dieser weniger als 0,1 g/l (bei 20 °C und 1013 mbar) löslich ist und ausgewählt ist unter niedermolekularen, oligomeren oder polymeren Flüssigkeiten, in einer Menge aufbringt, die zu einer Bedeckung der Oberfläche führt.

Der Begriff Flüssigkeit ist dabei so zu verstehen, dass die Substanzen B bei der niedrigsten gewünschten Anwendungstemperatur T1 noch flüssig sind oder im Falle polymerer Flüssigkeiten keine Fließgrenze aufweisen. Die Fließgrenze ist definiert als die kleinste Schubspannung, oberhalb derer ein plastischer Stoff sich rheologisch wie eine Flüssigkeit verhält. Ein plastischer Stoff, der keine messbare Fließgrenze zeigt, verhält sich demnach rheologisch wie eine Flüssigkeit, ohne dass eine messbare Schubspannung angelegt werden muss. Er zerfließt somit bereits ohne oder bei geringster Anwendung äußerer Kräfte (siehe Römpp-Lexikon, Lacke und Druckfarben, Georg-Thieme-Verlag 1998, Stuttgart, S. 239).

Die vorliegende Erfindung betrifft daher ein Verfahren zur Herstellung von Gegenständen bzw. Substraten mit wenigstens einer Oberfläche, auf der eine Flüssigkeit A bei einer Temperatur $T \geq T1$ eine geringe Haftung aufweist, durch Aufbringen einer Substanz B in flüssiger oder in gelöster Form auf eine Oberfläche O des Substrats bzw. des Gegenstands in einer Menge, die zu einer Bedeckung der Oberfläche O führt, das dadurch gekennzeichnet ist, dass die Oberfläche O eine Vielzahl von Vertiefungen und Erhebungen aufweist, wobei die Abstände zwischen benachbarten Erhebungen im Mittel im Bereich von 0,01 bis 500 µm und die Höhenunterschiede zwischen zueinander benachbarten Erhebungen und Vertiefungen im Mittel im Bereich von 0,01 bis 500 µm liegen, die Substanz B mit der Flüssigkeit A nicht mischbar und in dieser weniger als 0,1 g/l (bei 20 °C und 1013 mbar) löslich ist und ausgewählt ist unter niedermolekularen und oligomeren Substanzen B1, die bei der Temperatur T1 flüssig sind, und polymeren Flüssigkeiten, d. h. plastischen polymeren Substanzen B2, die keine messbare Fließgrenzen zeigen.

Die Begriffe fortschreitender Kontaktwinkel, rückschreitender Kontaktwinkel, statischer Kontaktwinkel und Kontaktwinkelhysterese werden hier und im Folgenden gemäß den eingangs genannten und im Stand der Technik gebräuchlichen Definitionen gebraucht. Die Bestimmung des Kontaktwinkels erfolgt mit an sich bekannten Methoden, beispielsweise mit Hilfe eines mit einem Goniometer ausgerüsteten Mikroskops (siehe Dörfler, loc. cit., S. 75ff sowie C. D. Bain et al., Angew. Chem. 101 (1989) 522-528 sowie A. Born et al., Farbe & Lack 105 (1999) S. 96-104).

Die Art der Substanz B richtet sich nach der Flüssigkeit A und der Art der Oberfläche, für die eine geringe Benetzung erreicht werden soll. Zum einen darf die Substanz B mit der Flüssigkeit A nicht mischbar bzw. in dieser weniger als 0,1 g/l, vorzugsweise weniger als 0,05 g/l und insbesondere weniger als 0,01 g/l (bei 20 °C und 1013 mbar) löslich sein.

Bevorzugt sind dabei solche Substanzen B, die auf der Oberfläche bei $T \geq T1$ einen statischen Kontaktwinkel $\theta_B < 10°$ (z. B. bei 20 °C) bzw. keinen messbaren Kontaktwinkel aufweisen. Hierdurch wird die Beschichtung der Substratoberfläche erleichtert.

Es versteht sich von selbst, dass die Substanz B bei der Anwendungstemperatur nur eine geringe Flüchtigkeit aufweisen sollte, um eine Haltbarkeit der Beschichtung zu gewährleisten. Insbesondere sollte der Dampfdruck der Substanz B bei der Anwendungstemperatur, zumindest jedoch bei 20 °C, einen Wert von 0,1 mbar, insbesondere 0,01 mbar nicht überschreiten bzw. der Siedepunkt der Substanz B bei Normaldruck einen Wert von 200 °C, insbesondere von 250 °C nicht unterschreiten.

Sofern es sich bei der Substanz B um eine polymere Substanz B2 handelt, weist diese erfindungsgemäß zumindest bei der Temperatur T1 keine messbare Fließgrenze auf, d. h. die Substanz B2 ist ohne bzw. bereits bei geringsten Schubspannungen plastisch verformbar und somit fließfähig. Dies ist in der Regel dann der Fall, wenn die polymere Substanz B2 im Wesentlichen unvernetzt ist und keine kristallinen Bereiche aufweist.

Die untere Grenze der Anwendungstemperatur T1, ab der die Adhäsion der Flüssigkeit A deutlich verringert ist, hängt im Wesentlichen nur davon ab, ob die Substanz B bei dieser Temperatur flüssig ist, bzw. keine Fließgrenze zeigt. Die Obergrenze der Temperatur, bei der keine oder nur eine geringe Benetzung stattfindet hängt nur von der Stabilität der Beschichtung ab. Grundsätzlich sind daher Anwendungstemperaturen im Bereich von -60 bis 250 °C, insbesondere im Bereich von -20 bis 200 °C und speziell im Bereich von -10 bis 150 °C möglich. Dementsprechend wird man bei der Auswahl geeigneter Substanzen B als Wert für T1 häufig eine Temperatur von ≥ -60 °C, insbesondere ≥ -20 °C und speziell von ≥ -10 °C zugrunde legen. Häufig wird eine geringe Benetzbarkeit bei Temperaturen von ≥ -10 °C, z. B. -10 bis 100 °C und insbesondere 0 bis 50 °C gewünscht. In diesem Fall wird man bei der Auswahl der Substanz B diesen Wert als T1 zugrunde legen. Dementsprechend betrifft eine bevorzugte Ausführungsform der Erfindung ein Verfahren, bei dem eine Substanz B eingesetzt wird, die bei -10 °C und insbesondere zumindest bei 0 °C

flüssig ist oder alternativ bei -10 °C bzw. 0 °C und darüber keine Fließgrenze zeigt. Sofern die polymere Substanz einen Glasübergang zeigt, liegt die zugehörige Glasübergangstemperatur vorzugsweise wenigstens 5 K, insbesondere wenigstens 10 K und speziell 20 K unter T1. Demnach sind hierunter solche Substanzen B2 bevorzugt, die eine Glasübergangstemperatur ≤ -5 °C, insbesondere ≤ -10 °C und speziell ≤ -20 °C aufweisen.

Sofern die geringe Benetzbarkeit nur bei höheren Temperaturen gewünscht ist, z. B. ≥ 50 °C, wird man zur Auswahl geeigneter Substanzen diese Temperatur T1 zugrunde legen. Demnach betrifft eine Ausführungsform der Erfindung ein Verfahren, bei dem T ≥ 50 °C ist und die Substanz B die geforderten Eigenschaften bei 50 °C und darüber aufweist.

Im Hinblick auf den gewünschten Effekt einer geringen Adhäsion der Flüssigkeit A auf der erfindungsgemäß erhaltenen Oberfläche ist die Substanz B vorzugsweise so ausgewählt, dass sie die Relation der Formel I erfüllt:

$$\gamma_B{}^*\cos(\theta_B) - \gamma_A{}^*\cos(\theta_A) - \gamma_{A/B} > 0 \qquad (I)$$

worin

- $\gamma_A$ für die Oberflächenspannung der Flüssigkeit A
- $\theta_A$ für den statischen Kontaktwinkel der Flüssigkeit A auf der unbehandelten Oberfläche O
- $\gamma_B$ für die Oberflächenspannung der Substanz B
- $\theta_B$ für den statischen Kontaktwinkel der flüssigen Substanz B auf der unbehandelten Oberfläche O und
- $\gamma_{A/B}$ für die Grenzflächenspannung zwischen Flüssigkeit A und Substanz B steht.

In Formel I haben die Begriffe Grenzflächenspannung, Oberflächenspannung und statischer Kontaktwinkel die im Stand der Technik übliche Bedeutung (siehe z. B. Dörfel, loc. cit., Römpp, Chemielexikon 10. Auflage, S. 1608 und 2975ff.) und beziehen sich auf die bei der Temperatur T1 geltenden Werte. Sofern T1 ≥ -10 °C und insbesondere ≥ 0 °C ist, können auch für $\gamma_{A,}$ $\gamma_B$, $\theta_A$, $\theta_B$, und $\gamma_{A/B}$ die Werte bei Normalbedingungen (25 °C und 1013 mbar) zugrunde gelegt werden. Die Werte für $\gamma_A$, $\gamma_B$ und $\gamma_{A/B}$ können häufig der Literatur entnommen werden, z. B. aus kommerziellen Datenbanken wie Winspirs Version 4.01, Silver Platter Software©, Silver Platter Ltd. N.V. 1999 und einschlägigen Handbüchern.

Die Bestimmung der Oberflächenspannung $\gamma_A$ der Flüssigkeit A bzw. $\gamma_B$ der Substanz B kann in an sich bekannter Weise erfolgen, z. B. durch (a) Meniskus-Bildung und Steighöhe in Kapillaren, (b) Blasendruck einer in eine Flüssigkeit austretenden Gasblase, (c) Ring-Methode, (d) Wilhelmy-Methode oder (e) nach der Methode der Gestalt liegender oder hängenden Tropfen (siehe z. B. Kohlrausch, Praktische Physik 1, S. 200 ff., Stuttgart, Teubner 1996; zur Methode des hängenden Tropfens (Pendant Drop) siehe auch S. Wu, "Polymer Interface and Adhesion", Marcel Decker Inc., New York 1982, S. 266-268). Werte für die Oberflächenspannung von Flüssigkeiten A findet man beispielsweise im Handbook of Chemistry and Physics 76. Auflage, CRC-Press 1995, 6-155 bis 6-158. Entsprechend kann die Grenzflächenspannung zwischen Flüssigkeit A und Substanz B durch (a) Wägeverfahren, bei denen die Kraft gemessen wird, die man aufwenden muss, um eine Platte oder einen Bügel aus einer Flüssigkeit zu ziehen, (b) Tropfenvolumenverfahren, (c) Methode des "spinning drops", (d) Blasendruckverfahren und (e) nach der Methode des hängenden Tropfens (siehe z. B. Kohlrausch, Praktische Physik 1, S. 230 ff., Stuttgart, Teubner 1985) bestimmt werden. Die Oberflächenspannung handelsüblicher Polymere B2 sind teilweise in der Literatur angegeben; siehe z. B. Wu et al. loc. cit. S. 88 ff. sowie S. Ellefson et al. J. Am. Ceram. Soc. 21, 193, (1938); S. Wu, J. Colloid Interface Sci. 31, 153, (1969), J. Phys. Chem. 74, 632 (1970), J. Polym. Sci, C34, 19, (1971); R.J. Roe et al., J. Phys. Chem. 72, 2013 (1968), J. Phys. Chem. 71, 4190 (1967), J. Colloid Interface Sci. 31, 228, (1969); J.F. Padday in "Surface and Colloid Science (Herausgeber E. Matijevic), Wiley, New York 1969, S. 101-149.

Die Substanz B weist vorzugsweise eine Grenzflächenspannung ≤ 50 mN/m, insbesondere im Bereich von 5 bis 45 mN/m und speziell im Bereich von 10 bis 40 mN/m bei 20 °C auf, insbesondere dann, wenn die Flüssigkeit A eine wässrige Flüssigkeit ist.

Beispiele für geeignete Substanzen B sind

- niedermolekulare Kohlenwasserstoffe, insbesondere gesättigte Kohlenwasserstoffe mit wenigstens 8 C-Atomen, vorzugsweise wenigstens 10 C-Atomen, insbesondere 10 bis 20 C-Atomen, z. B. Octane, Nonane, Decane, Decalin, Undecane, Dodecane, Tetradecane, Hexadecan und deren Mischungen;

- Perfluorkohlenwasserstoffe mit wenigstens 8 C-Atomen, vorzugsweise wenigstens 10 C-Atomen, insbesondere 10 bis 40 C-Atomen, z. B. Perflurorodecaline, Perfluoroeicosane und Perfluorotetracosane und deren Mischungen; und

- Alkanole mit wenigstens 8 C-Atomen, vorzugsweise wenigstens 10 C-Atomen, z. B. 3-Octanol, 1-Decanol, 2-Decanol, Undecanole, Dodecanole, Tridecanole, 2-Hexadecanol, 2-Hexyldecanol und deren Mischungen.

Geeignete Substanzen B sind insbesondere auch Polyisobutene, die je nach Molekulargewicht flüssig, zähflüssig oder fest sein können. Diese weisen in der Regel ein zahlenmittleres Molekulargewicht im Bereich von 300 bis $5x10^6$ insbesondere im Bereich 600 bis $3x10^6$ Dalton auf.

Geeignete Substanzen B sind insbesondere auch Silikone, die je nach Molekulargewicht flüssig, zähflüssig oder fest sein können. Diese weisen in der Regel ein zahlenmittleres Molekulargewicht im Bereich von 200 bis $10^6$ insbesondere im Bereich 400 bis $3x10^5$ Dalton auf. Bei den Silikonen handelt es sich in der Regel um lineare, verzweigte oder cyclische Polydimethylsiloxane oder um Polymethylhydrogensiloxane. Diese können an ihren Termini oder als Seitenketten die folgenden Gruppen G aufweisen: Wasserstoff, Hydroxylgruppen, Aminogruppen, $C_1$-$C_{20}$-Alkylgruppen, $C_1$-$C_{20}$-Alkoxygruppen, Hydroxy-$C_2$-$C_4$-alkylgruppen, Formyl- und $C_1$-$C_{20}$-Alkylcarbonylgruppen, Carboxy-$C_1$-$C_{20}$-alkylgruppen, Amino-$C_1$-$C_{20}$-alkylgruppen, Aminogruppen, N-(2-amino-$C_1$-$C_4$-alkyl)amino-$C_1$-$C_{20}$-alkylgruppen, Glycidyl- oder Glycidyloxygruppen, Methylpolyoxyethylenalkylgruppen, Hydroxypolyoxyethylenalkylgruppen, Methylpolyoxyethylenpolyoxypropylengruppen, Hydroxypolyoxyethylengruppen, Polyoxyethylengruppen, Phenylgruppen oder perfluorierte $C_1$-$C_{20}$-Alkylgruppen. Beispiele für bevorzugte Gruppen G sind neben Wasserstoff, $C_1$-$C_4$-Alkyl wie Methyl oder Ethyl, OH, Aminoalkyl wie $(CH_2)_{1-10}NH_2$, Methylpolyoxyethylenalkylgruppen wie $(CH_2)_3$-$(OCH_2CH_2)_{1-10}$-$OCH_3$, Hydroxypolyoxyethylenalkylgruppen wie $(CH_2)_3$-$(OCH_2CH_2)_{1-10}$-OH, Aminogruppen wie $N(CH_3)_2$.

Polydimethylsiloxane sind in der Regel überwiegend aus Wiederholungseinheiten der allgemeinen Formel a, Polymethylhydrogensiloxane überwiegend aus Wiederholungseinheiten der Formel b aufgebaut:

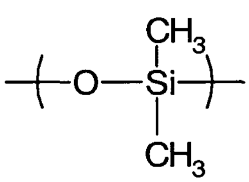 (a) 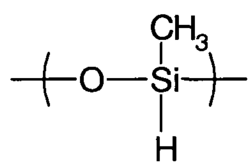 (b)

Sie weisen gegebenenfalls ein oder mehrere Gruppen der Formel c:

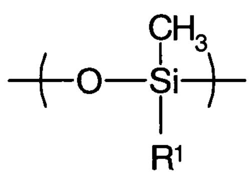 (c)

und Endgruppen der Formeln d und/oder e auf:

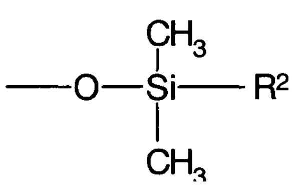 (d) 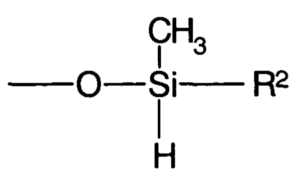 (e)

Hierin steht $R^1$ für eine der zuvor genannten, von Wasserstoff und Methyl verschiedenen Gruppen G. $R^2$ hat die für G angegebenen Bedeutungen.

Die Polydimethylsiloxane sowie die Polymethylhydrogensiloxane können linear oder verzweigt oder cyclisch sein, wobei lineare Polydimethylsiloxane und Polymethylhydrogensiloxane bevorzugt sind. Die Gruppen der Formel (c) können, soweit vorhanden, statistisch oder in Blöcken in der Siloxankette angeordnet sein.

Beispiele für geeignete Silikone sind:

- Polydimethylsiloxane mit einem Molekulargewicht von 100 bis 1000000 g/mol, bevorzugt 300 bis 500000, besonders bevorzugt 1000 bis 200000 g/mol (Zahlenmittel);

- Polymethylhydrogensiloxane mit einem Molekulargewicht von 200 bis 1000000 g/mol, bevorzugt 400 bis 400000, besonders bevorzugt 800 bis 150000 g/mol (Zahlenmittel);
- Wasserstoffterminierte Polydimethylsiloxane mit einem Molekulargewicht von 100 bis 900000 g/mol, bevorzugt 400 bis 500000, besonders bevorzugt 500 bis 200000 g/mol (Zahlenmittel);
- Silanolterminierte Polydimethylsiloxane mit einem Molekulargewicht von 200 bis 800000 g/mol, bevorzugt 400 bis 500000, besonders bevorzugt 500 bis 300000 g/mol (Zahlenmittel);
- Amino-$C_1$-$C_{10}$-alkylterminierte Polydimethylsiloxane mit einem Molekulargewicht von 200 bis 600000 g/mol, bevorzugt 300 bis 400000, besonders bevorzugt 400 bis 300000 g/mol (Zahlenmittel);
- Hydroxy-$C_1$-$C_{10}$-alkylterminierte Polydimethylsiloxane mit einem Molekulargewicht von 100 bis 500000 g/mol, bevorzugt 150 bis 300000, besonders bevorzugt 180 bis 200000 g/mol (Zahlenmittel); und
- Glycidyloxy-terminierte Polydimethylsiloxane mit einem Molekulargewicht von 150 bis 400000 g/mol, bevorzugt 180 bis 200000, besonders bevorzugt 200 bis 250000 g/mol (Zahlenmittel).

Derartige Silikone sind bekannt z. B. aus Moretto et al., Silicones, Kap. 3 in Ullmanns Encyclopedia of Industrial Chemistry, 5th ed. on CD-ROM, und im Handel erhältlich, beispielsweise unter den Handelsbezeichnungen Rhodorsil (Rhodia) und von der Fa. Geleste ABCR, Tullytown, PA, USA.

Beispiele für weitere geeignete Substanzen B2 sind:

- Poly(alkylacrylate) und Poly(alkylmethacrylate) sowie Mischpolymere von Alkylacrylaten und -methacrylaten, soweit diese flüssig sind bzw. keine Fließgrenze zeigen. Beispiele hierfür sind Polymethylacrylat, Poly(n-propylacrylat), Poly(iso-butylacrylat), Poly(n-butylacrylat), Poly(tert-butylacrylat), Polymethylmethacrylat, Poly-(n-propylmethacrylat), Poly(isobutylmethacrylate), Poly(n-butylmethacrylat), Poly(tert-butylmethacrylat);
- Polyester vorzugsweise, wie Poly(bisphenol A)terephthalat, Poly(ethylenadipat), Poly(ethylenterephthalat), Poly (oxyethylenoxyterephthaloyl), Poly(oxypentamethylenoxyterephthaloyl), Poly(oxytetramethyleneoxyadipoyl).

Die polymeren Substanzen sind geeignet, soweit sie bei T1 flüssig sind bzw. keine Fließgrenze bei T1 zeigen.

Art und Struktur der Oberfläche sind von untergeordneter Bedeutung, solange die Oberfläche eine Vielzahl von Vertiefungen und/oder Erhebungen aufweist und die Abstände zwischen benachbarten Erhebungen im Mittel im Bereich von 0,01 bis 500 µm, insbesondere im Bereich von 0,05 bis 200 µm, besonders bevorzugt im Bereich von 0,1 bis 100 µm, ganz besonders bevorzugt 0,2 bis 80 µm und speziell 0,5 bis 50 µm liegen. Die Höhenunterschiede zwischen zueinander benachbarten Erhebungen und Vertiefungen liegen im Mittel vorzugsweise im Bereich von 0,05 bis 200 µm und besonders bevorzugt im Bereich von 0,1 bis 100 µm, ganz besonders bevorzugt 0,2 bis 80 µm und speziell 0,5 bis 50 µm. Hierdurch wird eine gleichmäßige Haftung der Substanz B auf der Substratoberfläche gewährleistet. Sofern die Oberfläche dergestalt strukturiert ist, dass sie im Wesentlichen aus Vertiefungen in einer Grundfläche oder aus Erhebungen auf einer Grundfläche besteht, gelten für die mittleren Höhen (Maxima) der Erhebungen über die Grundfläche bzw. für die mittleren Tiefen (Minima) der Vertiefungen in der Grundfläche die oben angegebenen Wertebereiche.

Die Erhebungen/Vertiefungen können regelmäßig oder unregelmäßig angeordnet oder fraktaler Natur sein. Geeignet sind auch Oberflächenstrukturen mit unregelmäßig angeordneten Teilstrukturen, die ihrerseits eine regelmäßige Anordnung aufweisen. Beispiele für regelmäßige Anordnungen sind Waffelmuster-Strukturen (isolierte Vertiefungen in einer ebenen Oberfläche), Berg-Tal-Strukturen (= isolierte Erhebungen und isolierte Vertiefungen, zwischen denen sich Sattelflächen befinden, häufig als Mountain-Valley-Strukturen bezeichnet), Säulen und Spikes (isolierte Erhebungen aus einer ebenen Grundstruktur, die z. B. pyramidal, quaderförmig, unregelmäßig oder zylindrisch sein können) und Stripes (= bandförmige Erhebungen aus einer ebenen Oberfläche, bzw. lineare Vertiefungen in eine ebenen Oberfläche). Derartige Oberflächenstrukturen sind bekannt und beispielsweise beschrieben von Marzolin et al., Advanced Materials 1998, 10, S. 571-574, Thin Solid Film 315, 1998, S. 9-12. Beispiele für Oberflächen mit unregelmäßig angeordneten Erhebungen/Vertiefungen sind Strukturen, die beispielsweise durch Fixieren teilchenförmiger Materialien auf an sich ebenen Oberflächen erhältlich sind. Fraktale Oberflächenstrukturen und ihre Herstellung werden beispielsweise von Shibuichi et al., J. Phys. Chem. 1996, S. 19512-19517 beschrieben. Beispiele für Oberflächen mit unregelmäßig angeordneten Teilstrukturen, die ihrerseits eine regelmäßige Anordnung von Erhebungen und Vertiefungen aufweisen sind die beim Anätzen von Oberflächen erhältlichen Ätzmuster.

Die Erhebungen/Vertiefungen können auch eine Feinstruktur aufweisen, d.h. die Erhebungen und Vertiefungen weisen ihrerseits mehrere Erhebungen und/oder Vertiefungen auf, wobei Abstände und Höhenunterschiede zwischen benachbarten Erhebungen/Vertiefungen der Feinstruktur wenigstens um den Faktor 5 kleiner sind als die der zugehörigen Haupt- bzw. Überstrukturen. Die mittleren Abstände/Höhenunterschiede in den Feinstrukturen können je nach Größe der Überstruktur im Bereich von 5 nm bis 1000 nm und insbesondere im Bereich von 10 nm bis 500 nm liegen.

Die Herstellung von Oberflächen, die eine Vielzahl von Vertiefungen und Erhebungen aufweisen, ist an sich bekannt. Beispielsweise kann man Oberflächen mit regelmäßiger Anordnung von Erhebungen und Vertiefungen durch photolithographische Verfahren, wie sie beispielsweise in US 3,354,022, T. Ito et al., Jpn. J. Appl. Phys. 32 (1993) 6052 beschrieben werden, durch Prägeverfahren wie von Marzolin et al. (loc. cit.), Wilbur et al., Adv. Mater. 7, 1995, S. 649, Y. Xia et al., Langmuir 1996, 12, S. 4033, M. Toki et al., J. Non Cryst. Solids, 1988, 100, S. 479 beschrieben, wobei gegebenenfalls ein Sol-Gel-Prozess zur Bildung der Strukturen genutzt wird, oder durch Kombination von photolithographischen und Prägeverfahren, wie sie in EP-A 933 388 und von Marzolin et al. (loc. cit.) beschrieben werden, herstellen. Substrate mit Oberflächen, die eine Vielzahl von regelmäßig angeordneten Vertiefungen und Erhebungen in dem angegebenen Größenbereich aufweisen, sind im Übrigen kommerziell erhältlich, z. B. unter den Bezeichnungen Truegrain® der Fa. Autotype International Ltd., Wantage, Oxon, United Kingdom.

Oberflächen mit unregelmäßiger Anordnung von Erhebungen und Vertiefungen stellen eine bevorzugte Ausführungsform der Erfindung dar und lassen sich in besonders einfacher Weise herstellen, indem man ein feinteiliges, teilchenförmiges Material geeigneter Größe auf einer an sich glatten Oberfläche eines Gegenstandes aufbringt und auf der Oberfläche fixiert. Bevorzugt sind dabei solche teilchenförmigen Materialien, im folgenden auch als Pulver bezeichnet, worin 90 Gew.-% der Teilchen Teilchengrößen aufweisen, die im Bereich von 0,01 bis 500 µm, insbesondere im Bereich von 0,05 bis 200 µm, besonders bevorzugt im Bereich von 0,1 bis 100 µm, ganz besonders bevorzugt im Bereich von 0,2 bis 80 µm und speziell von 0,5 bis 50 µm liegen. Das Pulver kann anorganischer oder organischer Natur sein. Die Pulverteilchen können eine regelmäßige, z. B. eine kugelförmige oder eine ellipsoide Struktur, oder eine unregelmäßige, z. B. eine fraktale Struktur, eine poröse Struktur oder eine durch Agglomeration gebildete Struktur aufweisen. Beispiele für geeignete teilchenförmige Materialien sind organische Pulver, z. B. Polymerpulver wie Polyethylenpulver, Polypropylenpulver, Polytetrafluorethylenpulver, und bioorganische Pulver wie Lycopodium, weiterhin anorganische Pulver, beispielsweise solche auf Basis von Siliziumdioxid oder Silikaten wie Kieselsäurepulver, z. B. Fällungskieselsäure, Diatomeen-Erde, pyrogene Kieselsäure, Porosile und Kieselgelpulver, Tonmineralien, Quarzpulver, Glaspulver, z. B. Glaskugeln, weiterhin Aluminiumoxid, Zeolithe, Titandioxid, wobei oxidische Pulver auch mit fluororganischen Silanen hydrophobiert sein können.

Das Aufbringen des Pulvers erfolgt in der Regel in einer Menge, dass eine vollständige, zumindest eine 95%ige Bedeckung der Oberfläche mit den Pulverteilchen erreicht wird.

Das Fixieren der Pulverteilchen kann in beliebiger Weise erfolgen und ist für den Erfolg des erfindungsgemäßen Verfahrens von untergeordneter Bedeutung. Beispielsweise kann man eine Oberfläche mit einem Haftklebstoff versehen. Das Aufbringen des Pulvers erfolgt dann üblicherweise durch Aufstreuen. Das überschüssige, d. h. das nicht fixierte Pulver wird dann durch Abschütteln oder durch Abblasen mit einem Luftstrom entfernt. Anstelle des Haftklebstoffs kann man auch einen fotovernetzbaren Klebstoff oder einen härtbaren Lack, z. B. einen fotovernetzbaren oder thermisch härtbaren Lack verwenden. Das Aufbringen des Pulvers erfolgt dann in der oben beschriebenen Weise, das Fixieren durch Aushärten der Klebstoff bzw. Lackschicht, z. B. durch UV-Strahlung. Als Träger für die Pulverteilchen bzw. für den Klebstoff kommen beliebige Materialien in Betracht wie Kunststofffolien, Metall, lackiertes Metall, Keramik, Papier, Leder, Holz, aber auch Fasern und Garne, weiterhin Baustoffe wie Mauerwerk, Beton, Ziegel, Gipsflächen und dergleichen.

Weiterhin kann man die gewünschten Oberflächen durch Methoden des chemischen Ätzens, z. B. durch Ätzen mit Säure oder einem Lösungsmittel, oder durch physiko-chemische Ätzmethoden, z. B. mit Plasmastrahlung, Ionenätzen in Gegenwart von Sauerstoff und dergleichen erhalten.

Die Materialbeschaffenheit des Gegenstands bzw. des Substrats, welcher die Oberfläche aufweist, im Folgenden auch als Substratmaterial bezeichnet, ist für den erfindungsgemäßen Erfolg von untergeordneter Bedeutung. Naturgemäß ist das Substratmaterial unter den Anwendungsbedingungen, d. h. in dem Temperaturintervall [T1; T2], in dem eine geringe Benetzbarkeit gewünscht ist, fest und bezüglich der Rauhigkeit stabil, d. h. es zeigt bei Temperaturen oberhalb T1 anders als die polymere Substanz B2 eine hohe Fließgrenze oder ist nicht plastisch verformbar. Vorzugsweise ist es mit der Substanz B so abgestimmt, dass diese gegebene Rauhigkeit einen Kontaktwinkel < 10° aufweist.

Das Substrat kann einheitlich aus einem Material bestehen, d. h. Erhebungen/Vertiefungen und gegebenenfalls dazwischen befindliche Oberflächenbereiche bestehen aus einem Material. Das Substrat kann aber auch aus mehreren Materialien bestehen. Dies ist häufig dann der Fall, wenn das Substrat durch Aufbringen teilchenförmiger Substanzen auf einem Träger hergestellt wurde. In diesem Fall besteht das Substrat aus dem Trägermaterial, den

Teilchen, welche die Erhebungen/Vertiefungen bilden und gegebenenfalls dem Mittel, welches gegebenenfalls zum Fixieren der Teilchen auf dem Träger verwendet wurde. Auf die Oberflächeneigenschaft hat der Träger in der Regel keinen Einfluss.

Beispiele für Substratmaterialien sind Metalle, beispielsweise Eisen, Eisen-haltige Legierungen wie Stähle, konventionell lakkierte Oberflächen, Halbmetalle wie Silizium, weiterhin Keramik-Materialien, Kunststoffe, z. B. Polyolefine wie Polyethylen und Polypropylen, Polyester wie Polyethylenterephthalat, Polyvinylchlorid, Polystyrol, Polyalkylmethacrylate, Dien-Kautschuke, EPDM-Kautschuke, ABS, Polyarylenether, Polyethersulfone, Polyurethane, Polyamide, Polyacrylnitril, Styrolacrylnitril, Polykondensationsharze, insbesondere vernetzte Siloxane, wie sie beispielsweise bei der Kondensation von Organosilanolen entstehen, sowie Blends der vorgenannten Kunststoffe und Komposite von Kunststoffen mit anorganischen Füllstoffen.

Das Aufbringen der Substanz B auf die Oberfläche des Gegenstands kann in üblicher Weise erfolgen, beispielsweise durch Tauchen, Sprühen, Walzen, Spin-Coaten, Einreiben oder durch Migration unter Ausnutzung der Kapillarkräfte der Oberfläche. Letztere Methode ist eine bevorzugte Ausführungsform der Erfindung und wird insbesondere für das Aufbringen flüssigen Substanzen B1 bevorzugt.

In der Regel wird man die Substanz B in flüssiger Form oder gelöster Form auf die Oberfläche aufbringen. Sofern die Substanz B unter Flüssigkeiten B1 ausgewählt ist, weist diese vorzugsweise eine Viskosität $\leq$ 10000 $mm^2$/sec und insbesondere $\leq$ 5000 $mm^2$/sec, z. B. im Bereich 5 bis 10000 $mm^2$/sec (bei 20 °C) auf. Die hier angegebene Viskosität ist die kinematische Viskosität, wie sie beispielsweise mit einem Ubbelohde-Viskosimeter gemäß DIN 51562-1 bis 4 bestimmt werden kann. Eine Viskosität in diesem Bereich erleichtert das gleichmäßige Aufbringen der Substanz B.

Sofern die Substanz B eine höhere Viskosität aufweist oder gar fest ist, empfiehlt es sich, die Substanz B mit einem Lösungsmittel zu verdünnen oder sie darin zu lösen. Dies gilt insbesondere dann, wenn die Substanz B ausgewählt ist unter polymeren Substanzen B2. In diesem Fall wird B2 in Form einer Lösung in einem niedermolekularen Lösungsmittel auf die Oberfläche aufgebracht. Die Viskosität der Lösung wird dabei vorzugsweise auf Werte $\leq$ 10000 $mm^2$/sec und insbesondere $\leq$ 5000 $mm^2$/sec, z. B. im Bereich 5 bis 10000 $mm^2$/sec (bei 20 °C) eingestellt. Die Wahl des Lösungsmittels ist für den Erfolg des erfindungsgemäßen Verfahrens von untergeordneter Bedeutung und richtet sich in erster Linie nach der Substanz B, für die es gute Löseeigenschaften aufweisen sollte. Zudem sollte das Lösungsmittel die Oberflächenstruktur nicht zerstören sowie hinreichend flüchtig sein, damit es sich leicht entfernen lässt. Geeignete Lösungsmittel wird der Fachmann anhand einfacher Versuche ermitteln können. Beispiele für geeignete Lösungsmittel sind Kohlenwasserstoffe wie Aliphaten, Cycloaliphaten, Benzin, Xylol, Toluol; Alkohole wie Ethanol, Isopropanol, Butanol, tert-Butanol; Ketone wie Aceton, Methylethylketon, Methyl-isobutylketon, Diethylketon und Ether wie z. B. Tetrahydrofuran, Diisopropylether, Di-n-propylether, Methyl-tert.-butylether, Dioxan und Mischungen der vorgenannten Lösungsmittel.

Die Temperatur, bei der die Substanz B aufgebracht wird, ist für den erfindungsgemäßen Erfolg von untergeordneter Bedeutung. In der Regel wird man eine Temperatur wählen, bei der die Substanz B flüssig ist bzw. keine Fließgrenze mehr zeigt. Mit anderen Worten, das Aufbringen der Substanz B erfolgt in der Regel bei Temperaturen im Bereich von T1 oder darüber. Man kann die Substanz B auch bei deutlich höheren Temperaturen als T1 aufbringen, beispielsweise bei Temperaturen, die wenigstens 20 K, insbesondere wenigstens 30 K und besonders bevorzugt wenigstens 50 K oberhalb T1 liegen, um auf diese Weise die Viskosität der Substanz B zu verringern. Man kann die Substanz aber auch bei Temperaturen unterhalb T1 auf die Oberfläche aufbringen, gegebenenfalls unter Zuhilfenahme eines Lösungsmittels.

Erfindungsgemäß wird die Substanz B in einer Menge auf die Oberfläche aufgebracht, die für eine vollständige Bedeckung der Oberfläche ausreicht. Unter einer vollständigen Bedeckung der Oberfläche versteht man eine zumindest monomolekulare Schicht an Substanz B. Der Bedeckungsgrad liegt bei vollständiger Bedeckung bei wenigstens 99 % der Oberfläche. Für das Erreichen einer vollständigen Bedeckung reicht in der Regel eine Auflage an Substanz B von wenigstens $10^{-3}$ g/$m^2$, vorzugsweise wenigstens $5*10^{-3}$ g/$m^2$, insbesondere wenigstens $10^{-2}$ g/$m^2$ aus. Insbesondere liegt die Auflage an Substanz B im Bereich von $10^{-3}$ g/$m^2$ bis 100 g/$m^2$, vorzugsweise im Bereich von $5*10^{-3}$ g/$m^2$ bis 80 g/$m^2$ und insbesondere im Bereich von $10^{-2}$ g/$m^2$ bis 50 g/$m^2$, besonders bevorzugt $10^{-2}$ g/$m^2$ bis 10 g/$m^2$ und speziell $10^{-2}$ g/$m^2$ bis 5 g/$m^2$.

Die auf diesem Wege erhaltenen Oberflächen und damit auch Gegenstände, bzw. Substrate, die eine derartige Oberfläche aufweisen, sind neu und ebenfalls Gegenstand der Erfindung. Flüssigkeiten A haben zu diesen Oberflächen bei einer Anwendungstemperatur T $\geq$ T1 keine oder nur eine geringe Adhäsion, die sich in einer Kontaktwinkelhysterese $\Delta\theta = \theta_a - \theta_r$ von nicht mehr als 40°, insbesondere nicht mehr als 20° und insbesondere nicht mehr als 10° zum Ausdruck kommt. Die Flüssigkeiten A laufen bereits bei geringem Neigungswinkel schnell von den erfindungsgemäßen Oberflächen ab, so dass keine Stagnation der Bewegung an der Oberflächen stattfindet. Dadurch kommt es nicht zum Trocknen der Flüssigkeitstropfen und Ablagerungen werden vermieden. Schmutzpartikel werden von den Flüssigkeiten A sehr leicht und schnell von den Oberflächen abgewaschen. Zudem bleiben die optischen Eigenschaften der unbehandelten Oberflächen erhalten.

Das erfindungsgemäße Verfahren ist insbesondere für die Herstellung von Oberflächen geeignet, die von Alkoholen, insbesondere von Polyolen wie Glycerin und Glykol, und von wässrigen Flüssigkeiten nicht oder nur in geringem Umfang benetzt werden, bzw. auf denen diese Flüssigkeiten nicht oder nur in geringem Maße haften. Als wässrige Flüssigkeiten werden hier und im Folgenden Flüssigkeiten bezeichnet, die zu wenigstens 60 Vol.-%, insbesondere wenigstens 80 Vol.-%, bezogen auf die flüssigen Bestandteile der Flüssigkeit aus Wasser bestehen. Beispiele für wässrige Flüssigkeiten sind neben Wasser, auch wässrige Laugen und Säuren, Lösungen von anorganischen oder organischen Stoffen z. B. von Salzen, Zuckern, Stärke, Proteinen, Tensiden, Alkoholen oder Polymeren in Wasser sowie wässrige Emulsionen, Dispersionen und Suspensionen.

Aufgrund ihrer vorteilhaften Eigenschaften sind die erfindungsgemäßen Oberflächen für eine Vielzahl von Anwendungen geeignet. Beispielsweise kann man Gegenstände, die einer starken Verschmutzung ausgesetzt sind, mit diesen Oberflächen ausrüsten. Auf diese Weise verringert man nicht nur das Verschmutzen der Gegenstände sondern auch die verschmutzungsbedingte Korrosion. Weiterhin kann man Tankinnenwände, Innenwände von Vorratsbehältern für Feststoffe, Innenwände von Rohrleitungen sowie von chemischen Apparaten und dergleichen mit den erfindungsgemäßen Oberflächen ausrüsten. Man erreicht auf diese Weise eine geringere Haftung von Flüssigkeiten an den Behälterwänden und verringert aufgrund des Selbstreinigungseffekts der Oberfläche auch die Bildung von Ablagerungen und ermöglicht ein leichteres Reinigen von festen Rückständen.

Die folgenden Abbildungen und Beispiele dienen der Verdeutlichung der Erfindung, sind jedoch nicht einschränkend zu verstehen.

Figur 1 ist eine schematische Darstellung für eine Versuchsanordnung zur Beschichtung eines Substrats (1) mit einer flüssigen Substanz B unter Ausnutzung von Kapillarkräften. Hierzu wird das Substrat (1) mit einer Kante in ein mit der flüssigen Substanz B (3) gefülltes Vorratsgefäß (4) gestellt. Hierbei migriert aufgrund von Kapillarkräften dies Substanz B entgegen der Gravitation in die Vertiefungen der Substratoberfläche und bildet somit einen dünnen Flüssigkeitsfilm (2) auf der Oberfläche des Substrats aus.

Figur 2 zeigt eine rasterelektronenmikroskopische Aufnahme der Oberfläche einer Polyesterfolie mit einer regelmäßigen Mountain-Valley-Anordnung von Erhebungen und Vertiefungen. Der mittlere Abstand zwischen zwei durch eine Sattelfläche getrennten Vertiefungen beträgt etwa 2 µm, der mittlere Höhenunterschied zwischen den Erhebungen und Vertiefungen etwa 10 µm.

Beispiele

I. Analytik

Bestimmung des statischen, des fortschreitenden und des rückschreitenden Kontaktwinkels mit einem mit Goniometer ausgerüsteten Mikroskop.

Bestimmung der Oberflächenspannung und der Grenzflächenspannung: Nach der Methode des hängenden Tropfens wie z. B. beschrieben von O. I. del Rio et al., J. of Colloid Interface Sci. 196 (1997), S. 136, J. P. Garandert et al., J. of Colloid Interface Sci. 1994, S. 165, 351, K. Mysels, Colloid Surfaces 43 (1990), S. 241.

2. Herstellung von beschichteten Substraten

Beispiel 1:

Sphärischen Teilchen von Lycopodium (mittlere Teilchengröße ca. 20 µm), kommerziell erhältlich von Fluka, wurden auf ein Klebeband (TF) (Tesa Film, 1 x 1 cm, kommerziell erhältlich von Beiersdorf) aufgebracht, indem man das Klebeband mit Lycopodium bestreute und überschüssiges Pulver abblies.

Das so erhaltene Substrat wurde in einer Versuchsanordnung gemäß Figur 1 48 h mit einer Kante (Tiefe 1 mm) in ein flüssiges Polydimethylsiloxan (Rhodorsil 48V100, kommerziell erhältlich von Rhodia Chimie, Viskosität $\eta$ (20 °C) = 102,5 cSt) getaucht. Dabei migrierte das Polydimethylsiloxan gegen die Gravitation in die Vertiefungen der Struktur.

Der statische Kontaktwinkel von Wasser auf der unbehandelten Oberfläche des Substrats betrug 145° der statische Kontaktwinkel des Silikonöls auf der unbehandelten Oberfläche war < 10°. Die Oberflächenspannung $\gamma_{H2O}$ betrug 72 mN/m, die des Polydimethylsiloxans $\gamma_{PS}$ 20,9 mN/m. Die Grenzflächenspannung $\gamma_{H2O/PS}$ betrug 30,1 mN/m (alle Werte bei 20 °C).

Der fortschreitende Kontaktwinkel $\theta_a$ und der rückschreitende Kontaktwinkel $\theta_r$ von Wasser wurde für die erfindungsgemäß behandelte Oberfläche des Substrats und zu Vergleichszwecken für die unbehandelte Oberfläche des Substrats bestimmt. Die gefundenen Werte und die daraus berechnete Kontaktwinkelhysterese sind in Tabelle 1 zusammengestellt.

Beispiel 2:

Analog Beispiel 1 wurde das in Figur 2 gezeigte Substrat (kommerziell erhältlich unter der Bezeichnung Truegrain MV von Autotype International Ltd., UK) mit einem flüssigen, silanolterminierten Polydimethylsiloxan (Silikon DMS-S12 der Fa. Gelest ABCR, Viskosität η (20 °C) = 26 cSt) behandelt.

Der statische Kontaktwinkel von Wasser auf der unbehandelten Oberfläche des Substrats betrug 104°, der statische Kontaktwinkel des Silikonöls auf der unbehandelten Oberfläche war < 10°. Die Oberflächenspannung $\gamma_{H2O}$ beträgt 72 mN/m, die des Polydimethylsiloxans $\gamma_{PS}$ 19 mN/m. Die Grenzflächenspannung $\gamma_{H2O/PS}$ betrug 27,7 mN/m (alle Werte bei 20 °C).

Der fortschreitende Kontaktwinkel $\theta_a$ und der rückschreitende Kontaktwinkel $\theta_r$ von Wasser wurde für die erfindungsgemäß behandelte Oberfläche des Substrats und zu Vergleichszwecken für die unbehandelte Oberfläche des Substrats bestimmt. Die gefundenen Werte und die daraus berechnete Kontaktwinkelhysterese sind in Tabelle 1 zusammengestellt.

Tabelle 1:

| | Beispiel 1 | | Beispiel 2 | |
|---|---|---|---|---|
| | unbehandelt | behandelt | unbehandelt | behandelt |
| $\theta_a$ $H_2O$ | 145° | 101° | 104° | 74° |
| $\theta_r$ $H_2O$ | 0° | 81° | 0° | 72,5° |
| $\Delta\theta$ | 145° | 20° | 104° | 1,5° |

Beispiele 3 - 7:

Analog Beispiel 2 wurde jeweils eine Probe des dort verwendeten Substrats mit Decanol (Viskosität η (20 °C) = 12,4 cSt), 2-Hexyldecan-1-ol (Viskosität η (20 °C) = 31,3 cSt), einem Polymethylhydrogensiloxan (Typ HMS 991 der Fa. Gelest ABCR, Viskosität η (20 °C) = 22,5 cSt), einem silanolterminierten Polydimethylsiloxan (Silikon DMS-S21 der Fa. Gelest ABCR, Viskosität η (20 °C) = 88,3 cSt) bzw. einem Polydimethylsiloxan (Rhodorsil 48V100, kommerziell erhältlich von Rhodia Chimie, Viskosität η (20 °C) = 102,5 cSt) behandelt. Der statische Kontaktwinkel für diese Substanzen war in allen Fällen < 10°. Die Ergebnisse sind in Tabelle 2 angegeben.

Tabelle 2:

| | Bsp. 3 | Bsp. 4 | Bsp. 5 | Bsp. 6 | Bsp. 7 |
|---|---|---|---|---|---|
| Substanz B | Dekanol | 2-Hexyldekanol | HMS 991 1) | S21 2) | 48V100 3) |
| $\gamma_B$ [mN/m] | 9,0 | 26,1 | 21,5 | 28,5 | 30,1 |
| $\gamma_{H2O/B}$ [mN/m] | 28,8 | 27,1 | 19,7 | 20,4 | 20,9 |
| $\theta_a$ $H_2O$ | 54° | 86° | 89° | 89° | 90° |
| $\theta_r$ $H_2O$ | 49° | 83° | 88° | 89° | 88° |
| $\Delta\theta$ | 5° | 3° | 1° | 1 | 2° |

1) Polymethylhydrogensiloxan
2) Silikon DMS-S21
3) Rhodorsil 48V100

III. Test der Schmutzentfernung

Eine Probe von Beispiel 1 wurde durch Aufstreuen von Kieselgel 60, 0,04 bis 0,063 mm (kommerziell erhältlich von Merck) beschmutzt. Dann wurde die Probe um 20° aus der Horizontalen geneigt und Wasser aufgetropft. Die Wassertropfen gleiten von den Oberflächen ab und entfernen dabei die Schmutzpartikel. Die Effektivität von der Schmutzentfernung zum Vergleich mit einer unbehandelten Probe MV ohne Silikonöl wurde um 95 % erhöht. Bei der Referenz Probe gleiten die Tropfen bei einem Neigungswinkel von 20° nicht ab.

## Patentansprüche

1. Verfahren zur Herstellung von Gegenständen bzw. Substraten mit wenigstens einer Oberfläche, auf der eine Flüssigkeit A bei einer Temperatur $T \geq T1$ eine geringe Haftung aufweist, durch Aufbringen einer Substanz B in flüssiger oder in gelöster Form auf eine Oberfläche O des Substrats bzw. des Gegenstands in einer Menge, die zu einer Bedeckung der Oberfläche führt, **dadurch gekennzeichnet, dass** die Oberfläche O eine Vielzahl von Vertiefungen und/oder Erhebungen aufweist, wobei die Abstände zwischen benachbarten Erhebungen im Mittel im Bereich von 0,01 bis 500 µm und die Höhenunterschiede zwischen zueinander benachbarten Erhebungen und Vertiefungen im Mittel im Bereich von 0,01 bis 500 µm liegen, die Substanz B mit der Flüssigkeit A nicht mischbar und in dieser weniger als 0,1 g/l (bei 20 °C und 1013 mbar) löslich ist und ausgewählt ist unter niedermolekularen und oligomeren Substanzen B1, die bei der Temperatur T1 flüssig sind, und plastischen polymeren Substanzen B2, die bei Temperaturen $\geq$ T1 keine messbare Fließgrenze zeigen.

2. Verfahren nach Anspruch 1, **dadurch gekennzeichnet, dass** die Substanz B auf der Oberfläche einen statischen Kontaktwinkel $\theta_B < 10°$ (bei 20° C und 1013 mbar) aufweist.

3. Verfahren nach einem der vorhergehenden Ansprüche, **dadurch gekennzeichnet, dass** die Substanz B so ausgewählt ist, dass sie die Relation der Formel I erfüllt:

$$\gamma_B * \cos(\theta_B) - \gamma_A * \cos(\theta_A) - \gamma_{A/B} > 0 \quad \text{(I)}$$

worin

$\gamma_A$ für die Oberflächenspannung der Flüssigkeit A
$\theta_A$ für den statischen Kontaktwinkel der Flüssigkeit A auf der unbehandelten Oberfläche O
$\gamma_B$ für die Oberflächenspannung der Substanz B
$\theta_B$ für den statischen Kontaktwinkel der flüssigen Substanz B auf der unbehandelten Oberfläche O und
$\gamma_{A/B}$ für die Grenzflächenspannung zwischen Flüssigkeit A und Substanz B steht.

4. Verfahren nach einem der vorhergehenden Ansprüche, **dadurch gekennzeichnet, dass** die Substanz B ausgewählt ist unter Flüssigkeiten mit einer kinematischen Viskosität $\leq$ 10000 $mm^2$/sec (bei 20 °C).

5. Verfahren nach einem der vorhergehenden Ansprüche, **dadurch gekennzeichnet, dass** die Substanz B in einer Menge von $10^{-3}$ g/$m^2$ bis 100 g/$m^2$ auf die Oberfläche aufgebracht wird.

6. Verfahren nach einem der vorhergehenden Ansprüche, **dadurch gekennzeichnet, dass** die Temperatur T1 wenigstens -10 °C beträgt.

7. Verfahren nach einem der vorhergehenden Ansprüche, **dadurch gekennzeichnet, dass** die Flüssigkeit A ausgewählt ist unter wässrigen Flüssigkeiten.

8. Verfahren nach einem der vorhergehenden Ansprüche, **dadurch gekennzeichnet, dass** die Substanz B eine Grenzflächenspannung $\leq$ 50 mN/m bei 20 °C aufweist.

9. Verfahren nach einem der vorhergehenden Ansprüche, **dadurch gekennzeichnet, dass** die Substanz B ausgewählt ist unter Kohlenwasserstoffen mit wenigstens 8 C-Atomen, Perfluorkohlenwasserstoffen mit wenigstens 8 C-Atomen, Alkanolen mit wenigstens 8 C-Atomen, Silikonen, Polyisobutenen, Poly(alkylacrylaten) Poly(alkylmethacrylaten) und Polyestern.

10. Gegenstand, der wenigstens eine Oberfläche aufweist, die nach einem Verfahren gemäß einem der vorhergehenden Ansprüche erhältlich ist.

Figur 1:

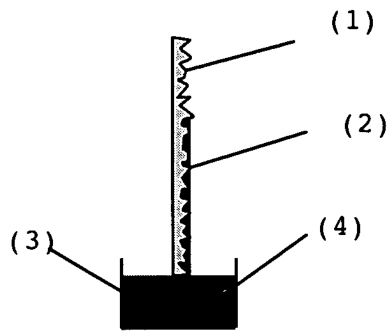


Figur 2:

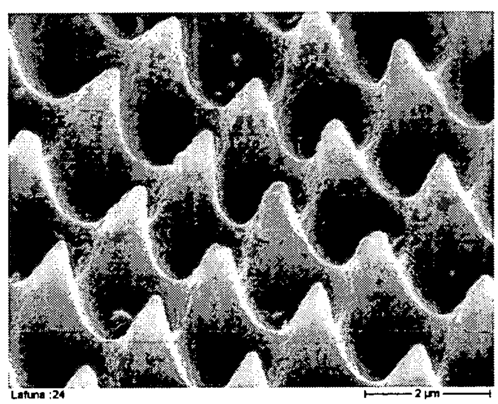

Europäisches Patentamt

# EUROPÄISCHER RECHERCHENBERICHT

Nummer der Anmeldung
EP 03 01 9209

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 1 206 976 A (BASF AG) 22. Mai 2002 (2002-05-22) * Absätze [0016],[0019]-[0023],[0027],[0028],[0053]; Anspruch 1 * ----- | 1-10 | B05D5/08 |

RECHERCHIERTE SACHGEBIETE (Int.Cl.7)
B05D
C09D

Der vorliegende Recherchenbericht wurde für alle Patentansprüche erstellt

| Recherchenort | Abschlußdatum der Recherche | Prüfer |
|---|---|---|
| MÜNCHEN | 12. November 2003 | Bjola, B |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : *technologischer Hintergrund*
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 03 01 9209

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-11-2003

| Im Recherchenbericht angeführtes Patentdokument | Datum der Veröffentlichung | Mitglied(er) der Patentfamilie | Datum der Veröffentlichung |
|---|---|---|---|
| EP 1206976 A | 22-05-2002 | DE 10057319 A1 | 23-05-2002 |
| | | EP 1206976 A2 | 22-05-2002 |
| | | EP 1207189 A2 | 22-05-2002 |
| | | US 2002059974 A1 | 23-05-2002 |

EPO FORM P0461

Für nähere Einzelheiten zu diesem Anhang : siehe Amtsblatt des Europäischen Patentamts, Nr.12/82